# EUROPEAN PATENT SPECIFICATION

(11) **EP 3 536 033 B1**
(45) Date of publication and mention of the grant of the patent: **30.09.2020**
(21) Application number: 17758551.0
(22) Date of filing: 30.08.2017
(51) Int. Cl.: H04W 36/04, H04W 4/00, H04W 8/18, H04W 4/70

(54) **AUTHORIZATION OF COVERAGE EXTENSION FOR AN INTERNET-OF-THINGS COMMUNICATION DEVICE**
AUTHORISIERUNG ZUR REICHWEITENERWEITERUNG FÜR EINE INTERNET-DER-DINGE-KOMMUNIKATIONSVORRICHTUNG
AUTORISATION D'EXTENSION DE COUVERTURE POUR UN DISPOSITIF DE COMMUNICATION D'INTERNET DES OBJETS

(30) Priority: 04.11.2016 EP 16197361
(43) Date of publication of application: 11.09.2019
(73) Proprietor: Deutsche Telekom AG, 53113 Bonn (DE)
(72) Inventor: KLATT, Axel, 50999 Köln (DE)
(74) Representative: Schwöbel, Thilo K.
(86) International application number: PCT/EP2017/071765
(87) International publication number: WO 2018/082825

(56) References cited:
- "3rd Generation Partnership Project; Technical Specification Group Services and System Aspects; Study on extended architecture support for Cellular Internet of Things (Release 14)", 3GPP STANDARD; 3GPP TR 23.730, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.2.0, 31 October 2016 (2016-10-31), pages 1-76, XP051173179,
- ZTE: "Physical Random Access Channel Coverage Enhancement", 3GPP DRAFT; R1-134303- PHYSICAL RANDOM ACCESS CHANNEL COVERAGE ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Guangzhou, China; 20131007 - 20131011 28 September 2013 (2013-09-28), XP050717447, Retrieved from the Internet: URL:http://www.3gpp.org/ftp/tsg_ran/WG1_RL 1/TSGR1_74b/Docs/ [retrieved on 2013-09-28]
- ERICSSON: "Authorization of use of Coverage Enhancements", 3GPP DRAFT; R2-166564 AUTHORIZATION OF USE OF COVERAGE ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. RAN WG2, no. Kaohsiung, Taiwan; 20161010 - 20161014 9 October 2016 (2016-10-09), XP051151066, Retrieved from the Internet: URL:http://www.3gpp.org/ftp/Meetings_3GPP_ SYNC/RAN2/Docs/ [retrieved on 2016-10-09]

## Description

### BACKGROUND

With the Internet of Things, all kinds of "things" (sensors, industrial systems, cars, meters, etc.) are able to be connected or are able to connect to the internet and/or will be able to communicate with each other or with an application server. It is predicted that by the beginning or the early years of the next decade 20 to 50 billion devices will be wirelessly connected in the Internet of Things (loT), and some analysts even predict that the number of such connected devices (or radio devices or internet-of-things communication devices) will grow into the tens of billions until the end of this decade.

Current cellular radio technologies like LTE /LTE-A (Long Term Evolution / Long Term Evolution advanced) have been developed to achieve highest throughput with extremely efficient spectrum usage for mobile broadband. Battery powered low end internet-of-things devices have a totally different service characteristic and much stricter requirements on power consumption and cost. Therefore highly optimized radio technologies for this low end M2M or internet-of-things segment need to be provided, having especially the following requirements: significantly lowered cost of modules and infrastructure (i.e. no dedicated network required for internet-of-things communication devices), increased battery lifetime for devices (e.g. of 10+ years with 2 AA batteries), increased coverage of +20 dB compared to GSM (to allow also deep indoor deployment), significantly streamlined technology to avoid overhead and complexity (impact on Radio and core network architecture).

One such technology is the narrow band cellular internet-of-things technology that uses 180kHz downlink carriers based on OFDM (Orthogonal Frequency Division Multiplex) technology combined with an FDMA (Frequency Division Multiple Access) based uplink carrier. Another such technology corresponds to the so-called "Cat M" technology, or LTE internet-of-things technology.

Document 3GPP TR 23.730: "Study on extended architecture support for Cellular Internet of Things (Release 14)", is a 3GPP study paper evaluating the architecture enhancement to support Cellular Internet of Things (CloT) including NB-IoT, eMTC, and EC-GSM-loT thereby mentioning the support of authorization of use of Coverage Enhancement CE functionality. Different solutions can be envisioned e.g. a subscription based authorization via S1: During the RRc connection setup procedure, the eNB is informed by the MME, whether the loT device is allowed to used CE. f

### SUMMARY

It is an object of the present invention to provide for an enhanced communication of at least one internet-of-things communication device in a mobile communication network such that at least two coverage extension levels are used in order to provide an improved and/or customer-specifically tailored coverage solution between the nodes of the mobile communication network and the at least one internet-of-things communication device.

This object of the present invention is achieved by a method according to independent claim 1, a mobile communication network according to independent claim 7, system according to independent claim 8, an Internet-of-things communication device according to independent claim 9, a program according to independent claim 10 and a computer program product according to independent claim 11. Preferred embodiments are defined by the dependent claims.

It is thereby inter-alia possible according to the present invention that the use of the second coverage extension level can be barred or at least restricted with regard to those internet-of-things communication devices that have a corresponding subscriber profile within the mobile communication network. Hence, it is advantageously possible according to the present invention to define the possibility, for an internet-of-things communication device to use the second coverage extension level (or to be barred from using the second coverage extension level or to at least be restricted in using the second coverage extension level), in the subscriber profile associated to the internet-of-things communication device (or associated to a group of internet-of-things communication devices). The result according to the present invention is a better control of the permissions to use the second coverage extension level (compared to the first coverage extension level) from the core network, which is in line with typically an increased usage of network resources and/or air interface resources (at least in terms of "per byte of communication data transmitted") when using the second coverage extension level as compared to using the first coverage extension level.

The invention inter-alia aims at being applied with respect (access or communication) technologies providing different coverage levels, such as the narrow band cellular internet-of-things technology or the "Cat M" or LTE internet-of-things technology. The terms "first coverage extension level" and "second coverage extension level" refer to the use of the second coverage extension level being controlled (by a piece of subscriber profile information) or not (and not to whether the first or second coverage extension levels provide the best (or least) coverage with respect to all possible coverage (extension) levels considered. This is explained in the following:
According to a first considered scenario, an access or communication technology might be considered providing only two different coverage levels - such as a "normal" (or standard or default) coverage level, and a further coverage level providing a "better" or extended coverage. In such a scenario typically the first coverage extension level corresponds to the normal or standard or default coverage level, whereas the second coverage extension level corresponds to the further coverage level, providing an extended coverage. As typically the use of the coverage level providing a better coverage involves using more network and/or air interface resources, it provides a clear advantage (for the overall efficiency of the mobile communication network and/or its components or connected devices) that - especially in case that, according to the example considered, a default coverage level and a further coverage level is possible to be used for a user equipment or an internet-of-things communication device - the use of the further (or extended) coverage level is controllable by means of using subscription profile information, related to the corresponding user equipments or internet-of-things communication devices accessing the mobile communication network.

According to a further considered scenario, an access or communication technology might be considered providing three different coverage levels - such as, especially in case of the narrow band cellular internet-of-things technology, a "normal" (or standard or default) coverage (extension) level CE0, and a first further coverage level providing a "better" or extended coverage CE1, and a second further coverage level providing an even better or extended coverage CE2 (compared to the first further coverage level). Likewise in such a scenario, the use of a "better" coverage level (i.e. providing an enhanced coverage) should be controllable by means of using subscription profile information; however, in case that three different coverage levels (a first level, a second level, and a third level, assuming an increasing coverage in this order) exist according to the embodiment of the present invention or are to be considered with respect to controlling their use, it is either conceivable to apply the restriction or barring of a coverage level between the first and second levels or between the second and third levels (i.e. according to the embodiment, the restriction or barring of the use of a coverage level relates already to the use of the second (and, typically then, also the third) level (of such a considered three-level technology), and according to a second variant or embodiment, the restriction or barring of the use of a coverage level (only) relates to the third level). In such a situation (of a three-level technology being considered),
-- according to an example useful for understanding the invention the first coverage extension level corresponds to the first level, and the second coverage extension level corresponds to the second (or first further) level, providing an extended coverage, and
-- according to the embodiment the first coverage extension level corresponds to the second (or first further, i.e. providing the second best coverage) level, and the second coverage extension level corresponds to the third (or second further, i.e. providing the best coverage) level, providing a still extended coverage.

According to the first variant, it is possible to apply the control of access to coverage levels both between the first and second coverage extension levels, and between the second and third coverage extension levels; especially independently from one another, i.e. (besides or in addition to the coverage extension subscription information indicating that the internet-of-things communication device is subscribed to use the first coverage extension level and the use of the second coverage extension level is barred or restricted) a further coverage extension subscription information (being transmitted to the base station entity in the first step) indicates that the (at least one) internet-of-things communication device is subscribed to use the first and second coverage extension level and the use of the third coverage extension level being barred or restricted.

According to the present invention, the enhanced communication of an internet-of-things communication device (or at least one internet-of-things communication device of typically a multitude of different internet-of-things communication devices) in a mobile communication network, i.e. in a radio cell served by a base station entity, is realized by transmitting, in a first step, a coverage extension subscription information to the base station entity, and, in a second step subsequent to the first step, by a communication request of the at least one internet-of-things communication device being either rejected or delayed by the base station entity or avoided by the internet-of-things communication device, in case that the coverage situation is sufficiently bad and in case that the coverage extension subscription information indicates that the at least one internet-of-things communication device is subscribed to use the first coverage extension level and the use of the second coverage extension level being barred or restricted.
The coverage extension subscription information (that the serving base station entity receives) is related to the at least one internet-of-things communication device and either indicates that the at least one internet-of-things communication device is subscribed to use both the first and the second coverage extension level or it indicates that the at least one internet-of-things communication device is subscribed to use the first coverage extension level while the use of the second coverage extension level being barred or restricted. This information (i.e. whether both coverage extension levels are allowed or only the first coverage extension level) is typically stored, within the mobile communication network or within the core network thereof, in a subscriber profile information.
The coverage situation of the considered internet-of-things communication device being sufficiently bad means that the at least one internet-of-things communication device is in a coverage situation necessitating the use of the second coverage extension level (instead of only using the first coverage extension level).

The communication between the internet-of-things communication device and the mobile communication network typically provides the possibility to choose or to adapt the coverage extension level, especially by means of repeating more or less often the transmission of a radio signal carrying communication data. Additionally and/or alternatively, the data transmission power level could also be modified in order to modify the radio coverage. By means of adapting the coverage level, it is advantageously possible according to the present invention to serve different internet-of-things communication devices within a radio cell.

According to an embodiment of the present invention, in a third step either prior to the first step or subsequent to the first step but prior to the second step, the coverage extension subscription information or an analogous coverage extension subscription information is transmitted from the base station entity to the at least one internet-of-things communication device, wherein the coverage extension subscription information or the analogous coverage extension subscription information indicates whether the at least one internet-of-things communication device is subscribed to use both the first and the second coverage extension level or whether the at least one internet-of-things communication device is subscribed to use the first coverage extension level while the use of the second coverage extension level being barred or restricted, wherein, in the second step, the internet-of-things communication device at least avoids communication requests, directed to the base station entity, related to the transmission of payload communication data.

Thereby, it is advantageously possible not only to apply a rejection and/or a delay regarding a communication request transmitted from the internet-of-things communication device (that could - without having received the coverage extension subscription information or analogous coverage extension subscription information - be unaware of the use of the second coverage extension level being restricted or barred) to the base station entity, but it is advantageously possible to even avoid the generation of such a communication request (and, hence, also the use of the corresponding air interface and power resources (especially within the internet-of-things communication device), as well as the treatment of such a communication request in the base station entity). According to one specific embodiment of the present invention, the coverage extension subscription information (transmitted to the considered internet-of-things communication device in the third step) might correspond to (or might even be identical to) the coverage extension subscription information transmitted to the base station entity in the first step. However, according to another embodiment of the present invention, what is transmitted to the considered internet-of-things communication device in the third step does not correspond to (or is not identical to) the coverage extension subscription information but is slightly different, hence constitutes an analogous coverage extension subscription information (for the purposes of informing the internet-of-things communication device whether it is configured (or able or subscribed) to use both the first and the second coverage extension level or to use the first coverage extension level while the use of the second coverage extension level being barred or restricted). According to a further embodiment, it is advantageously possible to transmit the coverage extension subscription information directly from the core network to the internet-of-things communication device, via the base station entity.

According to a further embodiment of the present invention, in the second step - and in case that the coverage extension subscription information or the analogous coverage extension subscription information indicates that the at least one internet-of-things communication device is subscribed to use the first coverage extension level while the use of the second coverage extension level being barred or restricted, and furthermore in case that the at least one internet-of-things communication device is in a coverage situation necessitating the use of the second coverage extension level - the internet-of-things communication device transmits a communication request to the base station entity related to temporarily using the second coverage extension level.

Thereby, it is advantageously possible that - provided the considered internet-of-things communication device is in a sufficiently bad coverage situation -, even though the internet-of-things communication device is not subscribed to "normally" or on a standard basis use the second coverage extension level, it is nevertheless possible for the internet-of-things communication device to transmit at least a signaling information (such that it might be granted a temporary access to the second coverage extension level). Otherwise, at least in case that the sufficiently bad coverage situation of the internet-of-things communication device continuously applies, no communication at all would be possible between the mobile communication network and the considered internet-of-things communication device.

According to a further embodiment of the present invention, the use of the first coverage extension level is associated with the use - by the at least one internet-of-things communication device - of a first portion of a random access channel within the radio cell of the base station entity, and wherein the use of the second coverage extension level is associated with the use - by the at least one internet-of-things communication device - of a second portion of a random access channel within the radio cell of the base station entity, wherein the communication request, of the at least one internet-of-things communication device, to transmit payload and/or control communication data uses the second portion of the random access channel.

According to still a further embodiment of the present invention, the mobile communication network comprises, especially as part of the core network, at least one mobility management entity, wherein the coverage extension subscription information is transmitted to the base station entity - especially by the mobility management entity - as a subscriber profile identity information,
the subscriber profile identity information being related to the at least one internet-of-things communication device, and comprising an indicating whether the at least one internet-of-things communication device is subscribed to use both the first and the second coverage extension level or whether the at least one internet-of-things communication device is subscribed to use the first coverage extension level while the use of the second coverage extension level being barred or restricted.

Thereby, it is advantageously possible according to the present invention that the coverage extension subscription information can be transmitted efficiently to the base station entity.

In all embodiments of the invention, - besides the first coverage extension level and the second coverage extension level - at least a third coverage extension level is able to be applied regarding the communication between the at least one internet-of-things communication device and the mobile communication network, wherein the at least one internet-of-things communication device has a subscriber profile within the mobile communication network such that it is either configured to use the third, first and second coverage extension level or to use the third and first coverage extension level while the use of the second coverage extension level being barred or restricted, wherein the coverage extension subscription information, being transmitted to the base station entity in the first step, indicates whether the at least one internet-of-things communication device is subscribed to use the third, the first and the second coverage extension level or whether the at least one internet-of-things communication device is subscribed to use the third and the first coverage extension level while the use of the second coverage extension level being barred or restricted.

By means of using at least three different coverage extension levels or coverage classes (or coverage levels), it is advantageously possible to provide a higher flexibility in the transmission of communication data between the mobile communication network and the internet-of-things communication device. Especially, by means of the third coverage extension level corresponding to a normal coverage level, the first coverage extension level corresponding to an increased coverage level compared to the normal coverage level, and the second coverage extension level corresponding to an increased coverage level compared to the first coverage extension level, it is advantageously possible to control the access or the use of the second coverage extension level, i.e. the highest coverage level (providing the best radio coverage).

According to further alternative embodiments of the present invention,
-- either the third coverage extension level corresponds to a normal coverage level, the first coverage extension level corresponding to an increased coverage level compared to the normal coverage level, and the second coverage extension level corresponding to an increased coverage level compared to the first coverage extension level,
-- or the second coverage extension level corresponds to an increased coverage level compared to the first coverage extension level, and the third coverage extension level corresponding to an increased coverage level compared to the second coverage extension level,
wherein especially the second coverage extension level is related to using a higher number of repetitions or other coverage enhancement means - especially a smaller bandwidth - compared to the first coverage extension level, when transmitting data from the base station entity to the at least one internet-of-things communication device or vice versa.

By means of the third coverage extension level being or corresponding to - according to a first alternative embodiment - a normal (or standard or default) coverage level (and the first and second coverage extension levels corresponding, respectively, to increased coverage levels compared to the normal coverage level), it is advantageously possible according to the present invention that the restriction or barring of data exchange between internet-of-things communication devices and the mobile communication network occurs between the highest (or best) and the second highest (or second best) coverage level.
By means of the third coverage extension level being or corresponding to - according to a second alternative embodiment - an increased coverage level compared to the second coverage extension level, it is advantageously possible according to the present invention that the restriction or barring of data exchange between internet-of-things communication devices and the mobile communication network occurs between the second highest (or second best) and the third highest (or third best) coverage level. In such an embodiment, it is advantageously possible according to the present invention that both the use of (or the access to) the second coverage extension level (and (a) higher level(s)) is controlled (i.e. it might be restricted and/or barred), and - especially independently thereof and additionally - the use of (or the access to) the third coverage extension level is controlled. Such an independent control of the access to the third coverage extension level (the third coverage extension level being or corresponding to an increased coverage level compared to the second coverage extension level), hence, requires:
-- three coverage extension levels (i.e. a first coverage extension level and a second coverage extension level and a third coverage extension level being able to be applied regarding the communication between the (at least one) internet-of-things communication devices and the mobile communication network),
-- the (at least one) internet-of-things communication device having a subscriber profile within the mobile communication network such that:
   -- it is either configured to use the first, second, and third coverage extension level or to use the first and second coverage extension level while the use of the third coverage extension level being barred or restricted, or such that
   -- it is either configured to use both the first and the second coverage extension level or to use the first coverage extension level while the use of the second (and typically the third) coverage extension level being barred or restricted, and
-- in the first step (and especially while the at least one internet-of-things communication device is served by the base station entity), - besides the coverage extension subscription information - a further coverage extension subscription information is transmitted to the base station entity, the further coverage extension subscription information being related to the (at least one) internet-of-things communication device, and indicating whether the (at least one) internet-of-things communication device is subscribed to use (typically besides the first and the second coverage extension level) also the third coverage extension level or whether the (at least one) internet-of-things communication device is subscribed to use the first and second coverage extension levels while the use of the third coverage extension level being barred or restricted,
-- in the second step, subsequent to the first step,
   -- in case that the coverage extension subscription information indicates that the (at least one) internet-of-things communication device is subscribed to use the first coverage extension level and the use of the second coverage extension level being barred or restricted, and furthermore in case that the (at least one) internet-of-things communication device is in a coverage situation necessitating the use of the second coverage extension level, a communication request, of the (at least one) internet-of-things communication device, to transmit payload and/or control communication data is either rejected or delayed by the base station entity or avoided by the internet-of-things communication device, and
   -- in case that the further coverage extension subscription information indicates that the (at least one) internet-of-things communication device is subscribed to use the first and second coverage extension level and the use of the third coverage extension level being barred or restricted, and furthermore in case that the (at least one) internet-of-things communication device is in a coverage situation necessitating the use of the third coverage extension level, a communication request, of the (at least one) internet-of-things communication device, to transmit payload and/or control communication data is either rejected or delayed by the base station entity or avoided by the internet-of-things communication device.
With such an independent control of the access to the third coverage extension level, it is preferred that in a third step (either prior to the first step or subsequent to the first step but prior to the second step), - besides the coverage extension subscription information or an analogous coverage extension subscription information being transmitted from the base station entity to the (at least one) internet-of-things communication device - the further coverage extension subscription information or an analogous further coverage extension subscription information is transmitted from the base station entity to the (at least one) internet-of-things communication device, wherein the further coverage extension subscription information or the analogous further coverage extension subscription information indicates whether the (at least one) internet-of-things communication device is subscribed to use the first, second, and third coverage extension levels or whether the (at least one) internet-of-things communication device is subscribed to use the first and second coverage extension levels while the use of the third coverage extension level being barred or restricted, wherein, in the second step, the internet-of-things communication device at least avoids - in case it is in a coverage situation necessitating the use of the third coverage extension level - communication requests, directed to the base station entity, related to the transmission of payload communication data.

Furthermore, the present invention relates to a communication network for an enhanced communication of at least one internet-of-things communication device in a mobile communication network, wherein the mobile communication network comprises an access network and a core network, wherein the access network comprises at least one radio cell and a base station entity associated with the at least one radio cell, wherein at least a first coverage extension level and a second coverage extension level is able to be applied regarding the communication between the at least one internet-of-things communication device and the mobile communication network,
wherein the at least one internet-of-things communication device has a subscriber profile within the mobile communication network such that it is either configured to use both the first and the second coverage extension level or to use the first coverage extension level while the use of the second coverage extension level being barred or restricted,
wherein the mobile communication network is configured such that:
-- while the at least one internet-of-things communication device is served by the base station entity, a coverage extension subscription information is transmitted to the base station entity, the coverage extension subscription information being related to the at least one internet-of-things communication device, and indicating whether the at least one internet-of-things communication device is subscribed to use both the first and the second coverage extension level or whether the at least one internet-of-things communication device is subscribed to use the first coverage extension level while the use of the second coverage extension level being barred or restricted,
-- in case that the coverage extension subscription information indicates that the at least one internet-of-things communication device is subscribed to use the first coverage extension level and the use of the second coverage extension level being barred or restricted, and furthermore in case that the at least one internet-of-things communication device is in a coverage situation necessitating the use of the second coverage extension level, a communication request, of the at least one internet-of-things communication device, to transmit payload and/or control communication data is either rejected or delayed by the base station entity or avoided by the internet-of-things communication device.

Thereby, it is advantageously possible to provide a mobile communication network that provides the advantages of the inventive method.

Furthermore, the present invention relates to a system for an enhanced communication of at least one internet-of-things communication device in a mobile communication network, the system comprising the internet-of-things communication device and the mobile communication network, wherein the mobile communication network comprises an access network and a core network, wherein the access network comprises at least one radio cell and a base station entity associated with the at least one radio cell,
wherein at least a first coverage extension level and a second coverage extension level is able to be applied regarding the communication between the at least one internet-of-things communication device and the mobile communication network,
wherein the at least one internet-of-things communication device has a subscriber profile within the mobile communication network such that it is either configured to use both the first and the second coverage extension level or to use the first coverage extension level while the use of the second coverage extension level being barred or restricted,
wherein the system is configured such that:
-- while the at least one internet-of-things communication device is served by the base station entity, a coverage extension subscription information is transmitted to the base station entity, the coverage extension subscription information being related to the at least one internet-of-things communication device, and indicating whether the at least one internet-of-things communication device is subscribed to use both the first and the second coverage extension level or whether the at least one internet-of-things communication device is subscribed to use the first coverage extension level while the use of the second coverage extension level being barred or restricted,
-- in case that the coverage extension subscription information indicates that the at least one internet-of-things communication device is subscribed to use the first coverage extension level and the use of the second coverage extension level being barred or restricted, and furthermore in case that the at least one internet-of-things communication device is in a coverage situation necessitating the use of the second coverage extension level, a communication request, of the at least one internet-of-things communication device, to transmit payload and/or control communication data is either rejected or delayed by the base station entity or avoided by the internet-of-things communication device.

Thereby, it is advantageously possible to provide a system that provides the advantages of the inventive method.

Furthermore, the present invention relates to an internet-of-things communication device suitable for communicating in an inventive mobile communication network or being part of an inventive system or according to an inventive method, wherein the internet-of-things device is especially configured such that in case that the coverage extension subscription information or the analogous coverage extension subscription information indicates that the internet-of-things communication device is subscribed to use the first coverage extension level while the use of the second coverage extension level being barred or restricted, and furthermore in case that the at least one internet-of-things communication device is in a coverage situation necessitating the use of the second coverage extension level, the internet-of-things communication device is configured to transmit a communication request to the base station entity related to temporarily using the second coverage extension level. suitable for receiving downlink communication data from an inventive mobile communication network or being part of an inventive system or according to an inventive method.

Additionally, the present invention relates to a program comprising a computer readable program code which, when executed on a computer or on an internet-of-things communication device or on a network component of a mobile communication network, especially a base station entity, or in part on an internet-of-things communication device and in part on a network component of a mobile communication network, especially a base station entity, causes the computer or the internet-of-things communication device and/or the network component of the mobile communication network to perform the inventive method.

Still additionally, the present invention relates to a computer program product for an enhanced communication of at least one internet-of-things communication device in a mobile communication network, the computer program product comprising a computer program stored on a storage medium, the computer program comprising program code which, when executed on a computer or on an internet-of-things communication device or on a network component of a mobile communication network, especially a base station entity, or in part on an internet-of-things communication device and in part on a network component of a mobile communication network, especially a base station entity, causes the computer or the internet-of-things communication device and/or the network component of the mobile communication network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

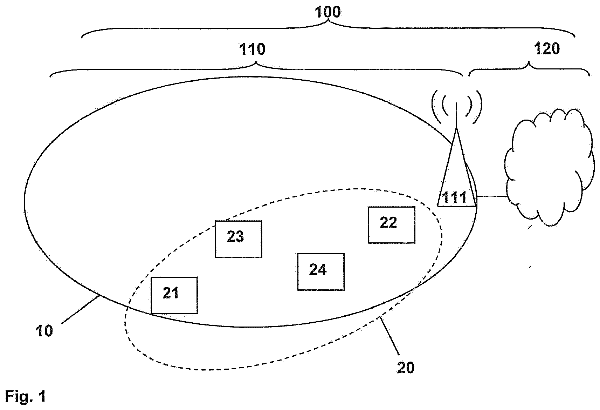

**Figure 1** schematically illustrate a mobile communication network comprising a radio cell being served by a base station entity, a plurality of internet-of-things communication devices being served by the mobile communication network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In **Figure 1** a mobile communication network 100 comprising a radio cell 10 being served by a base station entity 111 is schematically shown. In the example shown, the mobile communication network 100 comprises an access network 110 and a core network 120. The mobile communication network 100 is preferably a cellular telecommunications network comprising typically a plurality of network radio cells, one of which is represented in Figure 1 by means of a solid line and reference sign 10. In the mobile communication network 100, typically a plurality of mobile subscribers (or user equipments) are camping on the telecommunications network 100 within the network radio cell 10, i.e. the mobile subscribers are connected or are camping on a base station entity 111 serving the radio cell 10; however, such "normal" mobile subscribers (or user equipment) are not represented in Figure 1. In addition to such "normal" mobile subscribers (or user equipments), a certain number of internet-of-things communication devices 20 are also connected with the base station entity 111. In Figure 1, a first internet-of-things communication device 21, a second internet-of-things communication device 22, a third internet-of-things communication device 23, and fourth internet-of-things communication device 24 are schematically shown. The base station entity 111 is typically a base station, e.g. a NodeB or an eNodeB base transceiver station. The mobile communication network 100 is configured to provide mobile communication services to the mobile subscribers (or user equipments) within the radio cell 10 of the mobile communication network 100. Preferably, mobile communication data (related to the mobile communication services) are transmitted between the mobile subscribers and the mobile communication network via the base station entity 111, wherein the mobile communication data are transmitted with comparably high bitrates of at least 9,6 kBd (9600 bits per second). The air interface between the base station entity 111 and the mobile subscribers comprises a plurality of frequency channels within at least one frequency band to provide the mobile communication services.

The core network 120 is only schematically shown by means of a cloud representation. The public land mobile network 100 (especially the core network 120) comprises typically various network elements such as an MSC (Mobile Switching Center), a SGSN (Serving GPRS Support Node), a MME (Mobility Management Entity), a PDN-GW (Packet Data Network-Gateway) preferably a plurality of network elements thereof.

According to the present invention, a plurality of internet-of-things communication devices 20 are located within the network radio cell 10, i.e. the internet-of-things communication devices 20 are at least able to be connected to the base station entity 111 or at least a component thereof.

The internet-of-things communication devices 20 are configured to exchange radiofrequency electromagnetic signals which are received and/or transmitted by the base station entity 111, typically transmitting - in uplink direction, i.e. towards the base station entity, and/or in downlink direction, i.e. towards the internet-of-things communication devices 20 - communication data, especially small and infrequent communication data. In downlink direction, i.e. from the base station entity 111 to the internet-of-things communication devices 20, the need might occur (typically sporadically) to transmit larger chunks of data (typically to each one of the internet-of-things communication devices 20, individually), e.g. in order to perform a firmware update or the like.

Method for an enhanced communication of at least one internet-of-things communication device in a mobile communication network, wherein the mobile communication network comprises an access network and a core network, wherein the access network comprises at least one radio cell and a base station entity associated with the at least one radio cell,
wherein at least a first coverage extension level and a second coverage extension level is able to be applied regarding the communication between the at least one internet-of-things communication device and the mobile communication network,
wherein the at least one internet-of-things communication device has a subscriber profile within the mobile communication network such that it is either configured to use both the first and the second coverage extension level or to use the first coverage extension level while the use of the second coverage extension level being barred or restricted,
wherein the method comprises the following steps:
-- in a first step and while the at least one internet-of-things communication device is served by the base station entity, a coverage extension subscription information is transmitted to the base station entity, the coverage extension subscription information being related to the at least one internet-of-things communication device, and indicating whether the at least one internet-of-things communication device is subscribed to use both the first and the second coverage extension level or whether the at least one internet-of-things communication device is subscribed to use the first coverage extension level while the use of the second coverage extension level being barred or restricted,
-- in a second step, subsequent to the first step, in case that the coverage extension subscription information indicates that the at least one internet-of-things communication device is subscribed to use the first coverage extension level and the use of the second coverage extension level being barred or restricted, and furthermore in case that the at least one internet-of-things communication device is in a coverage situation necessitating the use of the second coverage extension level, a communication request, of the at least one internet-of-things communication device, to transmit payload and/or control communication data is either rejected or delayed by the base station entity or avoided by the internet-of-things communication device.

Method for an enhanced communication of at least one internet-of-things communication device in a mobile communication network, wherein the mobile communication network comprises an access network and a core network, wherein the access network comprises at least one radio cell and a base station entity associated with the at least one radio cell,
wherein at least a first coverage extension level and a second coverage extension level is able to be applied regarding the communication between the at least one internet-of-things communication device and the mobile communication network,
wherein the at least one internet-of-things communication device has a subscriber profile within the mobile communication network such that it is either configured to use both the first and the second coverage extension level or to use the first coverage extension level while the use of the second coverage extension level being barred or restricted,
wherein the method comprises the following steps:
-- in a first step and while the at least one internet-of-things communication device is served by the base station entity, a coverage extension subscription information is transmitted to the base station entity, the coverage extension subscription information being related to the at least one internet-of-things communication device, and indicating whether the at least one internet-of-things communication device is subscribed to use both the first and the second coverage extension level or whether the at least one internet-of-things communication device is subscribed to use the first coverage extension level while the use of the second coverage extension level being barred or restricted,
-- in a second step, subsequent to the first step, in case that the coverage extension subscription information indicates that the at least one internet-of-things communication device is subscribed to use the first coverage extension level and the use of the second coverage extension level being barred or restricted, and furthermore in case that the at least one internet-of-things communication device is in a coverage situation necessitating the use of the second coverage extension level, a communication request, of the at least one internet-of-things communication device, to transmit payload and/or control communication data is either rejected or delayed by the base station entity or avoided by the internet-of-things communication device.

According to the present invention, a method, a mobile communication network, a system and an internet-of-things communication device are proposed such that the communication between the base station entity 111 and the internet-of-things communication devices 20 (or at least one internet-of-things communication device 21, e.g. the first internet-of-things communication device 21) can be enhanced in the mobile communication network 100. According to the present invention, it is made use of at least a first coverage extension level and a second coverage extension level, i.e. the first and second coverage extension levels are able to be applied regarding the communication between the at least one internet-of-things communication device 21 and the mobile communication network 100. According to the present invention, a subscriber profile information or a subscriber profile (being defined either individually for each internet-of-things communication device or at least for each internet-of-things communication device of a group of internet-of-things communication devices) is defined such that the considered internet-of-things communication device 21 is either configured to use both the first and the second coverage extension level or to use the first coverage extension level while the use of the second coverage extension level being barred or restricted. In a first step, a coverage extension subscription information is transmitted to the base station entity 111, the coverage extension subscription information being related to the internet-of-things communication device 21. The coverage extension subscription information indicates whether the considered internet-of-things communication device 21 is subscribed to use both the first and the second coverage extension level or whether the internet-of-things communication device 21 is subscribed to use the first coverage extension level while the use of the second coverage extension level is barred or restricted. In a second step, subsequent to the first step, in case that the coverage extension subscription information indicates that the considered internet-of-things communication device 21 is subscribed to use the first coverage extension level and the use of the second coverage extension level being barred or restricted, and furthermore in case that the considered internet-of-things communication device 21 is in a coverage situation necessitating the use of the second coverage extension level, a communication request, of the considered internet-of-things communication device 21, to transmit payload and/or control communication data is either rejected or delayed by the base station entity 111 or avoided by the internet-of-things communication device 21.

## Claims

1. Method for an enhanced communication of at least one intemet-of-things communication device (21) in a mobile communication network (100), wherein the mobile communication network (100) comprises an access network (110) and a core network (120), wherein the access network (110) comprises at least one radio cell (10) and a base station entity (111) associated with the at least one radio cell (10),
wherein at least a first coverage extension level and a second coverage extension level is able to be applied regarding the communication between the at least one internet-of-things communication device (21) and the mobile communication network (100),
wherein the at least one internet-of-things communication device (21) has a subscriber profile within the mobile communication network (100) such that it is either configured to use both the first and the second coverage extension level or to use the first coverage extension level while the use of the second coverage extension level being barred or restricted,
wherein the method comprises the following steps:
-- in a first step and while the at least one internet-of-things communication device (21) is served by the base station entity (111), a coverage extension subscription information is transmitted to the base station entity (111), the coverage extension subscription information being related to the at least one internet-of-things communication device (21), and indicating whether the at least one internet-of-things communication device (21) is subscribed to use both the first and the second coverage extension level or whether the at least one internet-of-things communication device (21) is subscribed to use the first coverage extension level while the use of the second coverage extension level being barred or restricted,
-- in a second step, subsequent to the first step, in case that the coverage extension subscription information indicates that the at least one internet-of-things communication device (21) is subscribed to use the first coverage extension level and the use of the second coverage extension level being barred or restricted, and furthermore in case that the at least one internet-of-things communication device (21) is in a coverage situation necessitating the use of the second coverage extension level, a communication request, of the at least one internet-of-things communication device (21), to transmit payload and/or control communication data is either rejected or delayed by the base station entity (111) or avoided by the internet-of-things communication device (21),
wherein - besides the first coverage extension level and the second coverage extension level - at least a third coverage extension level is able to be applied regarding the communication between the at least one internet-of-things communication device (21) and the mobile communication network (100),
wherein the at least one internet-of-things communication device (21) has a subscriber profile within the mobile communication network (100) such that it is either configured to use the third, first and second coverage extension level or to use the third and first coverage extension level while the use of the second coverage extension level being barred or restricted,
wherein the coverage extension subscription information, being transmitted to the base station entity (111) in the first step, indicates whether the at least one internet-of-things communication device (21) is subscribed to use the third, the first and the second coverage extension level or whether the at least one internet-of-things communication device (21) is subscribed to use the third and the first coverage extension level while the use of the second coverage extension level being barred or restricted.

2. Method according to claim 1, wherein in a third step, subsequent to the first step but prior to the second step, the coverage extension subscription information is transmitted from the base station entity (111) to the at least one internet-of-things communication device (21), wherein the coverage extension subscription information indicates whether the at least one internet-of-things communication device (21) is subscribed to use both the first and the second coverage extension level or whether the at least one internet-of-things communication device (21) is subscribed to use the first coverage extension level while the use of the second coverage extension level being barred or restricted, wherein, in the second step, the internet-of-things communication device (21) at least avoids communication requests, directed to the base station entity (111), related to the transmission of payload communication data.

3. Method according to one of the preceding claims, wherein, in the second step - and in case that the coverage extension subscription information indicates that the at least one internet-of-things communication device (21) is subscribed to use the first coverage extension level while the use of the second coverage extension level being barred or restricted, and furthermore in case that the at least one internet-of-things communication device (21) is in a coverage situation necessitating the use of the second coverage extension level - the internet-of-things communication device (21) transmits a communication request to the base station entity (111) related to temporarily using the second coverage extension level.

4. Method according to one of the preceding claims, wherein the use of the first coverage extension level is associated with the use - by the at least one internet-of-things communication device (21) - of a first portion of a random access channel within the radio cell (10) of the base station entity (111), and wherein the use of the second coverage extension level is associated with the use - by the at least one intemet-of-things communication device (21) - of a second portion of a random access channel within the radio cell (10) of the base station entity (111), wherein the communication request, of the at least one internet-of-things communication device (21), to transmit payload and/or control communication data uses the second portion of the random access channel.

5. Method according to one of the preceding claims, wherein the mobile communication network (100) comprises, as part of the core network (120), at least one mobility management entity, wherein the coverage extension subscription information is transmitted to the base station entity (111) -by the mobility management entity - as a subscriber profile identity information,
the subscriber profile identity information being related to the at least one internet-of-things communication device (21), and comprising an indicating whether the at least one internet-of-things communication device (21) is subscribed to use both the first and the second coverage extension level or whether the at least one internet-of-things communication device (21) is subscribed to use the first coverage extension level while the use of the second coverage extension level being barred or restricted.

6. Method according to one of the preceding claims, wherein
-- either the third coverage extension level corresponds to a normal coverage level, the first coverage extension level corresponding to an increased coverage level compared to the normal coverage level, and the second coverage extension level corresponding to an increased coverage level compared to the first coverage extension level,
-- or the second coverage extension level corresponds to an increased coverage level compared to the first coverage extension level, and the third coverage extension level corresponding to an increased coverage level compared to the second coverage extension level,
wherein the second coverage extension level is related to using a higher number of repetitions or other coverage enhancement means - including a smaller bandwidth - compared to the first coverage extension level, when transmitting data from the base station entity (111) to the at least one internet-of-things communication device (21) or vice versa.

7. Mobile communication network (100) for an enhanced communication of at least one internet-of-things communication device (21) in a mobile communication network (100), wherein the mobile communication network (100) comprises an access network (110) and a core network (120), wherein the access network (110) comprises at least one radio cell (10) and a base station entity (111) associated with the at least one radio cell (10),
wherein at least a first coverage extension level and a second coverage extension level is able to be applied regarding the communication between the at least one internet-of-things communication device (21) and the mobile communication network (100),
wherein the at least one internet-of-things communication device (21) has a subscriber profile within the mobile communication network (100) such that it is either configured to use both the first and the second coverage extension level or to use the first coverage extension level while the use of the second coverage extension level being barred or restricted,
wherein the mobile communication network (100) is configured such that:
-- while the at least one internet-of-things communication device (21) is served by the base station entity (111), a coverage extension subscription information is transmitted to the base station entity (111), the coverage extension subscription information being related to the at least one internet-of-things communication device (21), and indicating whether the at least one internet-of-things communication device (21) is subscribed to use both the first and the second coverage extension level or whether the at least one internet-of-things communication device (21) is subscribed to use the first coverage extension level while the use of the second coverage extension level being barred or restricted, wherein - besides the first coverage extension level and the second coverage extension level - at least a third coverage extension level is able to be applied regarding the communication between the at least one internet-of-things communication device (21) and the mobile communication network (100), wherein the at least one internet-of-things communication device (21) has a subscriber profile within the mobile communication network (100) such that it is either configured to use the third, first and second coverage extension level or to use the third and first coverage extension level while the use of the second coverage extension level being barred or restricted,
wherein the coverage extension subscription information, being transmitted to the base station entity (111), indicates whether the at least one internet-of-things communication device (21) is subscribed to use the third, the first and the second coverage extension level or whether the at least one internet-of-things communication device (21) is subscribed to use the third and the first coverage extension level while the use of the second coverage extension level being barred or restricted,
-- in case that the coverage extension subscription information indicates that the at least one intemet-of-things communication device (21) is subscribed to use the first coverage extension level and the use of the second coverage extension level being barred or restricted, and furthermore in case that the at least one internet-of-things communication device (21) is in a coverage situation necessitating the use of the second coverage extension level, a communication request, of the at least one intemet-of-things communication device (21), to transmit payload and/or control communication data is either rejected or delayed by the base station entity (111) or avoided by the internet-of-things communication device (21).

8. System for an enhanced communication of at least one internet-of-things communication device (21) in a mobile communication network (100), the system comprising the intemet-of-things communication device (21) and the mobile communication network (100), wherein the mobile communication network (100) comprises an access network (110) and a core network (120), wherein the access network (110) comprises at least one radio cell (10) and a base station entity (111) associated with the at least one radio cell (10),
wherein at least a first coverage extension level and a second coverage extension level is able to be applied regarding the communication between the at least one internet-of-things communication device (21) and the mobile communication network (100),
wherein the at least one internet-of-things communication device (21) has a subscriber profile within the mobile communication network (100) such that it is either configured to use both the first and the second coverage extension level or to use the first coverage extension level while the use of the second coverage extension level being barred or restricted,
wherein the system is configured such that:
-- while the at least one internet-of-things communication device (21) is served by the base station entity (111), a coverage extension subscription information is transmitted to the base station entity (111), the coverage extension subscription information being related to the at least one internet-of-things communication device (21), and indicating whether the at least one internet-of-things communication device (21) is subscribed to use both the first and the second coverage extension level or whether the at least one internet-of-things communication device (21) is subscribed to use the first coverage extension level while the use of the second coverage extension level being barred or restricted, wherein - besides the first coverage extension level and the second coverage extension level - at least a third coverage extension level is able to be applied regarding the communication between the at least one internet-of-things communication device (21) and the mobile communication network (100), wherein the at least one internet-of-things communication device (21) has a subscriber profile within the mobile communication network (100) such that it is either configured to use the third, first and second coverage extension level or to use the third and first coverage extension level while the use of the second coverage extension level being barred or restricted,
wherein the coverage extension subscription information, being transmitted to the base station entity (111), indicates whether the at least one internet-of-things communication device (21) is subscribed to use the third, the first and the second coverage extension level or whether the at least one internet-of-things communication device (21) is subscribed to use the third and the first coverage extension level while the use of the second coverage extension level being barred or restricted,
-- in case that the coverage extension subscription information indicates that the at least one internet-of-things communication device (21) is subscribed to use the first coverage extension level and the use of the second coverage extension level being barred or restricted, and furthermore in case that the at least one internet-of-things communication device (21) is in a coverage situation necessitating the use of the second coverage extension level, a communication request, of the at least one internet-of-things communication device (21), to transmit payload and/or control communication data is either rejected or delayed by the base station entity (111) or avoided by the internet-of-things communication device (21).

9. Internet-of-things communication device (21) for communicating in a mobile communication network (100) according to claim 7 or being part of a system according to claim 8 or for communicating according to a method according to one of claims 1 to 6, wherein the internet-of-things device (21) is configured such that in case that the coverage extension subscription information indicates that the internet-of-things communication device (21) is subscribed to use the first coverage extension level while the use of the second coverage extension level being barred or restricted, and furthermore in case that the at least one internet-of-things communication device (21) is in a coverage situation necessitating the use of the second coverage extension level, the internet-of-things communication device (21) is configured to transmit a communication request to the base station entity (111) related to temporarily using the second coverage extension level.

10. Program comprising a computer readable program code which, when executed on an internet-of-things communication device (21) or on a network component of a mobile communication network (100) or in part on an internet-of-things communication device (21) and in part on a network component of a mobile communication network (100), causes the internet-of-things communication device (21) and/or the network component of the mobile communication network (100) to perform a method according to one of claims 1 to 6.

11. Computer program product for an enhanced communication of at least one internet-of-things communication device (21) in a mobile communication network (100), the computer program product comprising a computer program stored on a storage medium, the computer program comprising program code which, when executed on an internet-of-things communication device (21) or on a network component of a mobile communication network (100) or in part on an internet-of-things communication device (21) and in part on a network component of a mobile communication network (100), causes the internet-of-things communication device (21) and/or the network component of the mobile communication network (100) to perform a method according to one of claims 1 to 6.

## Patentansprüche

1. Verfahren für eine verbesserte Kommunikation mindestens einer Internet-of-Things-Kommunikationsvorrichtung (21) in einem Mobilkommunikationsnetz (100),
wobei das Mobilkommunikationsnetz (100) ein Zugangsnetz (110) und ein Kernnetz (120) umfasst,
wobei das Zugangsnetz (110) mindestens eine Funkzelle (10) und eine Basisstationsentität (111) umfasst, die mit der mindestens einen Funkzelle (10) verknüpft ist,
wobei mindestens ein erster Versorgungsreichweitepegel und ein zweiter Versorgungsreichweitepegel im Hinblick auf die Kommunikation zwischen der mindestens einen Internet-of-Things-Kommunikationsvorrichtung (21) und dem Mobilkommunikationsnetz (100) angewendet werden kann,
wobei die mindestens eine Internet-of-Things-Kommunikationsvorrichtung (21) ein Teilnehmerprofil innerhalb des Mobilkommunikationsnetzes (100) aufweist, dergestalt, dass sie entweder dafür konfiguriert ist, sowohl den ersten als auch den zweiten Versorgungsreichweitepegel zu verwenden oder den ersten Versorgungsreichweitepegel zu verwenden, während die Verwendung des zweiten Versorgungsreichweitepegels gesperrt oder eingeschränkt ist, wobei das Verfahren die folgenden Schritte umfasst:
- in einem ersten Schritt, und während die mindestens eine Internet-of-Things-Kommunikationsvorrichtung (21) durch die Basisstationsentität (111) bedient wird, wird eine Versorgungsreichweite-Teilnahmeinformation zu der Basisstationsentität (111) gesendet, wobei sich die Versorgungsreichweite-Teilnahmeinformation auf die mindestens eine Internet-of-Things-Kommunikationsvorrichtung (21) bezieht und angibt, ob die mindestens eine Internet-of-Things-Kommunikationsvorrichtung (21) berechtigt ist, sowohl den ersten als auch den zweiten Versorgungsreichweitepegel zu verwenden, oder ob die mindestens eine Internet-of-Things-Kommunikationsvorrichtung (21) berechtigt ist, den ersten Versorgungsreichweitepegel zu verwenden, während die Verwendung des zweiten Versorgungsreichweitepegel gesperrt oder eingeschränkt ist,
- in einem zweiten Schritt, im Anschluss an den ersten Schritt, in dem Fall, dass die Versorgungsreichweite-Teilnahmeinformation angibt, dass die mindestens eine Internet-of-Things-Kommunikationsvorrichtung (21) zur Nutzung des ersten Versorgungsreichweitepegels berechtigt ist und die Nutzung des zweiten Versorgungsreichweitepegel gesperrt oder eingeschränkt ist, und des Weiteren in dem Fall, dass sich die mindestens eine Internet-of-Things-Kommunikationsvorrichtung (21) in einer Versorgungssituation befindet, die die Verwendung des zweiten Versorgungsreichweitepegels erforderlich macht, wird eine Kommunikationsanforderung der mindestens einen Internet-of-Things-Kommunikationsvorrichtung (21) zum Senden von Nutzdaten und/oder Steuerungskommunikationsdaten entweder durch die Basisstationsentität (111) zurückgewiesen oder verzögert oder durch die Internet-of-Things-Kommunikationsvorrichtung (21) vermieden,
wobei - neben dem ersten Versorgungsreichweitepegel und dem zweiten Versorgungsreichweitepegel - mindestens ein dritter Versorgungsreichweitepegel im Hinblick auf die Kommunikation zwischen der mindestens einen Internet-of-Things-Kommunikationsvorrichtung (21) und dem Mobilkommunikationsnetz (100) angewendet werden kann,
wobei die mindestens eine Internet-of-Things-Kommunikationsvorrichtung (21) ein Teilnehmerprofil innerhalb des Mobilkommunikationsnetzes (100) aufweist, dergestalt, dass sie entweder dafür konfiguriert ist, den dritten, ersten und zweiten Versorgungsreichweitepegel zu verwenden oder den dritten und ersten Versorgungsreichweitepegel zu verwenden, während die Verwendung des zweiten Versorgungsreichweitepegel gesperrt oder eingeschränkt ist,
wobei die Versorgungsreichweite-Teilnahmeinformation, die in dem ersten Schritt zu der Basisstationsentität (111) gesendet wird, angibt, ob die mindestens eine Internet-of-Things-Kommunikationsvorrichtung (21) berechtigt ist, den dritten, den ersten und den zweiten Versorgungsreichweitepegel zu verwenden, oder ob die mindestens eine Internet-of-Things-Kommunikationsvorrichtung (21) berechtigt ist, den dritten und den ersten Versorgungsreichweitepegel zu verwenden, während die Verwendung des zweiten Versorgungsreichweitepegels gesperrt oder eingeschränkt ist.

2. Verfahren nach Anspruch 1,
wobei in einem dritten Schritt, im Anschluss an den ersten Schritt, aber vor dem zweiten Schritt, die Versorgungsreichweite-Teilnahmeinformation von der Basisstationsentität (111) zu der mindestens einen Internet-of-Things-Kommunikationsvorrichtung (21) gesendet wird, wobei die Versorgungsreichweite-Teilnahmeinformation angibt, ob die mindestens eine Internet-of-Things-Kommunikationsvorrichtung (21) berechtigt ist, sowohl den ersten als auch den zweiten Versorgungsreichweitepegel zu verwenden, oder ob die mindestens eine Internet-of-Things-Kommunikationsvorrichtung (21) berechtigt ist, den ersten Versorgungsreichweitepegel zu verwenden, während die Verwendung des zweiten Versorgungsreichweitepegels gesperrt oder eingeschränkt ist,
wobei in dem zweiten Schritt die Internet-of-Things-Kommunikationsvorrichtung (21) mindestens Kommunikationsanforderungen, die an die Basisstationsentität (111) gerichtet sind und sich auf die Übertragung von Nutzdaten-Kommunikationsdaten beziehen, vermeidet.

3. Verfahren nach einem der vorangehenden Ansprüche,
wobei in dem zweiten Schritt - und in dem Fall, dass die Versorgungsreichweite-Teilnahmeinformation angibt, dass die mindestens eine Internet-of-Things-Kommunikationsvorrichtung (21) berechtigt ist, den ersten Versorgungsreichweitepegel zu verwenden, während die Verwendung des zweiten Versorgungsreichweitepegels gesperrt oder eingeschränkt ist, und des Weiteren in dem Fall, dass sich die mindestens eine Internet-of-Things-Kommunikationsvorrichtung (21) in einer Versorgungssituation befindet, die die Verwendung des zweiten Versorgungsreichweitepegels erforderlich macht - die Internet-of-Things-Kommunikationsvorrichtung (21) eine Kommunikationsanforderung an die Basisstationsentität (111) sendet, die sich auf die vorübergehende Verwendung des zweiten Versorgungsreichweitepegels bezieht.

4. Verfahren nach einem der vorangehenden Ansprüche,
wobei die Verwendung des ersten Versorgungsreichweitepegels mit der Verwendung - durch die mindestens eine Internet-of-Things-Kommunikationsvorrichtung (21) - eines ersten Abschnitts eines Direktzugriffskanals innerhalb der Funkzelle (10) der Basisstationsentität (111) verknüpft ist, und
wobei die Verwendung des zweiten Versorgungsreichweitepegels mit der Verwendung - durch die mindestens eine Internet-of-Things-Kommunikationsvorrichtung (21) - eines zweiten Abschnitts eines Direktzugriffskanals innerhalb der Funkzelle (10) der Basisstationsentität (111) verknüpft ist, wobei die Kommunikationsanforderung der mindestens einen Internet-of-Things-Kommunikationsvorrichtung (21) zum Senden von Nutzdaten und/oder zur Steuerung von Kommunikationsdaten den zweiten Abschnitt des Direktzugriffskanals verwendet.

5. Verfahren nach einem der vorangehenden Ansprüche,
wobei das Mobilkommunikationsnetz (100) als Abschnitt des Kernnetzes (120) mindestens eine Mobilitätsmanagemententität umfasst,
wobei die Versorgungsreichweite-Teilnahmeinformation - durch die Mobilitätsmanagemententität - an die Basisstationsentität (111) als eine Teilnehmerprofil-Identitätsinformation gesendet wird, wobei sich die Teilnehmerprofil-Identitätsinformation auf die mindestens eine Internet-of-Things-Kommunikationsvorrichtung (21) bezieht und einen Hinweis umfasst, ob die mindestens eine Internet-of-Things-Kommunikationsvorrichtung (21) berechtigt ist, sowohl den ersten als auch den zweiten Versorgungsreichweitepegel zu verwenden, oder ob die mindestens eine Internet-of-Things-Kommunikationsvorrichtung (21) berechtigt ist, den ersten Versorgungsreichweitepegel zu verwenden, während die Verwendung des zweiten Versorgungsreichweitepegels gesperrt oder eingeschränkt ist.

6. Verfahren nach einem der vorangehenden Ansprüche,
wobei
- entweder der dritte Versorgungsreichweitepegel einem normalen Versorgungspegel entspricht, der erste Versorgungsreichweitepegel einem erhöhten Versorgungspegel im Vergleich zum normalen Versorgungspegel entspricht, und der zweite Versorgungsreichweitepegel einem erhöhten Versorgungspegel im Vergleich zu dem ersten Versorgungsreichweitepegel entspricht,
- oder der zweite Versorgungsreichweitepegel einem erhöhten Versorgungspegel im Vergleich zu dem ersten Versorgungsreichweitepegel entspricht, und der dritte Versorgungsreichweitepegel einem erhöhten Versorgungspegel im Vergleich zu dem zweiten Versorgungsreichweitepegel entspricht,
wobei sich der zweite Versorgungsreichweitepegel auf die Verwendung einer größeren Anzahl von Wiederholungen oder anderer Versorgungsoptimierungsmittel - einschließlich einer kleineren Bandbreite - im Vergleich zu dem ersten Versorgungsreichweitepegel bezieht, wenn Daten durch die Basisstationsentität (111) zu der mindestens einen Internet-of-Things-Kommunikationsvorrichtung (21) gesendet werden oder umgekehrt.

7. Mobilkommunikationsnetz (100) für eine verbesserte Kommunikation mindestens einer Internet-of-Things-Kommunikationsvorrichtung (21) in einem Mobilkommunikationsnetz (100),
wobei das Mobilkommunikationsnetz (100) ein Zugangsnetz (110) und ein Kernnetz (120) umfasst,
wobei das Zugangsnetz (110) mindestens eine Funkzelle (10) und eine Basisstationsentität (111) umfasst, die mit der mindestens einen Funkzelle (10) verknüpft ist,
wobei mindestens ein erster Versorgungsreichweitepegel und ein zweiter Versorgungsreichweitepegel im Hinblick auf die Kommunikation zwischen der mindestens einen Internet-of-Things-Kommunikationsvorrichtung (21) und dem Mobilkommunikationsnetz (100) angewendet werden kann,
wobei die mindestens eine Internet-of-Things-Kommunikationsvorrichtung (21) ein Teilnehmerprofil innerhalb des Mobilkommunikationsnetzes (100) aufweist, dergestalt, dass sie entweder dafür konfiguriert ist, sowohl den ersten als auch den zweiten Versorgungsreichweitepegel zu verwenden oder den ersten Versorgungsreichweitepegel zu verwenden, während die Verwendung des zweiten Versorgungsreichweitepegels gesperrt oder eingeschränkt ist, wobei das Mobilkommunikationsnetz (100) so konfiguriert ist, dass:
- während die mindestens eine Internet-of-Things-Kommunikationsvorrichtung (21) durch die Basisstationsentität (111) bedient wird, eine Versorgungsreichweite-Teilnahmeinformation zu der Basisstationsentität (111) gesendet wird, wobei sich die Versorgungsreichweite-Teilnahmeinformation auf die mindestens eine Internet-of-Things-Kommunikationsvorrichtung (21) bezieht und angibt, ob die mindestens eine Internet-of-Things-Kommunikationsvorrichtung (21) berechtigt ist, sowohl den ersten als auch den zweiten Versorgungsreichweitepegel zu verwenden, oder ob die mindestens eine Internet-of-Things-Kommunikationsvorrichtung (21) berechtigt ist, den ersten Versorgungsreichweitepegel zu verwenden, während die Verwendung des zweiten Versorgungsreichweitepegel gesperrt oder eingeschränkt ist,
wobei - neben dem ersten Versorgungsreichweitepegel und dem zweiten Versorgungsreichweitepegel - mindestens ein dritter Versorgungsreichweitepegel im Hinblick auf die Kommunikation zwischen der mindestens einen Internet-of-Things-Kommunikationsvorrichtung (21) und dem Mobilkommunikationsnetz (100) angewendet werden kann,
wobei die mindestens eine Internet-of-Things-Kommunikationsvorrichtung (21) ein Teilnehmerprofil innerhalb des Mobilkommunikationsnetzes (100) aufweist, dergestalt, dass sie entweder dafür konfiguriert ist, den dritten, ersten und zweiten Versorgungsreichweitepegel zu verwenden oder den dritten und ersten Versorgungsreichweitepegel zu verwenden, während die Verwendung des zweiten Versorgungsreichweitepegel gesperrt oder eingeschränkt ist,
wobei die Versorgungsreichweite-Teilnahmeinformation, die zu der Basisstationsentität (111) gesendet wird, angibt, ob die mindestens eine Internet-of-Things-Kommunikationsvorrichtung (21) berechtigt ist, den dritten, den ersten und den zweiten Versorgungsreichweitepegel zu verwenden, oder ob die mindestens eine Internet-of-Things-Kommunikationsvorrichtung (21) berechtigt ist, den dritten und den ersten Versorgungsreichweitepegel zu verwenden, während die Verwendung des zweiten Versorgungsreichweitepegels gesperrt oder eingeschränkt ist,
- wobei in dem Fall, dass die Versorgungsreichweite-Teilnahmeinformation angibt, dass die mindestens eine Internet-of-Things-Kommunikationsvorrichtung (21) zur Nutzung des ersten Versorgungsreichweitepegels berechtigt ist und die Nutzung des zweiten Versorgungsreichweitepegel gesperrt oder eingeschränkt ist, und des Weiteren in dem Fall, dass sich die mindestens eine Internet-of-Things-Kommunikationsvorrichtung (21) in einer Versorgungssituation befindet, die die Verwendung des zweiten Versorgungsreichweitepegels erforderlich macht, eine Kommunikationsanforderung der mindestens einen Internet-of-Things-Kommunikationsvorrichtung (21) zum Senden von Nutzdaten und/oder Steuerungskommunikationsdaten entweder durch die Basisstationsentität (111) zurückgewiesen oder verzögert oder durch die Internet-of-Things-Kommunikationsvorrichtung (21) vermieden wird,

8. System für eine verbesserte Kommunikation mindestens einer Internet-of-Things-Kommunikationsvorrichtung (21) in einem Mobilkommunikationsnetz (100), wobei das System die Internet-of-Things-Kommunikationsvorrichtung (21) und das Mobilkommunikationsnetz (100) umfasst,
wobei das Mobilkommunikationsnetz (100) ein Zugangsnetz (110) und ein Kernnetz (120) umfasst,
wobei das Zugangsnetz (110) mindestens eine Funkzelle (10) und eine Basisstationsentität (111) umfasst, die mit der mindestens einen Funkzelle (10) verknüpft ist,
wobei mindestens ein erster Versorgungsreichweitepegel und ein zweiter Versorgungsreichweitepegel im Hinblick auf die Kommunikation zwischen der mindestens einen Internet-of-Things-Kommunikationsvorrichtung (21) und dem Mobilkommunikationsnetz (100) angewendet werden kann,
wobei die mindestens eine Internet-of-Things-Kommunikationsvorrichtung (21) ein Teilnehmerprofil innerhalb des Mobilkommunikationsnetzes (100) aufweist, dergestalt, dass sie entweder dafür konfiguriert ist, sowohl den ersten als auch den zweiten Versorgungsreichweitepegel zu verwenden oder den ersten Versorgungsreichweitepegel zu verwenden, während die Verwendung des zweiten Versorgungsreichweitepegels gesperrt oder eingeschränkt ist, wobei das System so konfiguriert ist, dass:
- während die mindestens eine Internet-of-Things-Kommunikationsvorrichtung (21) durch die Basisstationsentität (111) bedient wird, eine Versorgungsreichweite-Teilnahmeinformation zu der Basisstationsentität (111) gesendet wird, wobei sich die Versorgungsreichweite-Teilnahmeinformation auf die mindestens eine Internet-of-Things-Kommunikationsvorrichtung (21) bezieht und angibt, ob die mindestens eine Internet-of-Things-Kommunikationsvorrichtung (21) berechtigt ist, sowohl den ersten als auch den zweiten Versorgungsreichweitepegel zu verwenden, oder ob die mindestens eine Internet-of-Things-Kommunikationsvorrichtung (21) berechtigt ist, den ersten Versorgungsreichweitepegel zu verwenden, während die Verwendung des zweiten Versorgungsreichweitepegel gesperrt oder eingeschränkt ist,
wobei - neben dem ersten Versorgungsreichweitepegel und dem zweiten Versorgungsreichweitepegel - mindestens ein dritter Versorgungsreichweitepegel im Hinblick auf die Kommunikation zwischen der mindestens einen Internet-of-Things-Kommunikationsvorrichtung (21) und dem Mobilkommunikationsnetz (100) angewendet werden kann,
wobei die mindestens eine Internet-of-Things-Kommunikationsvorrichtung (21) ein Teilnehmerprofil innerhalb des Mobilkommunikationsnetzes (100) aufweist, dergestalt, dass sie entweder dafür konfiguriert ist, den dritten, ersten und zweiten Versorgungsreichweitepegel zu verwenden oder den dritten und ersten Versorgungsreichweitepegel zu verwenden, während die Verwendung des zweiten Versorgungsreichweitepegel gesperrt oder eingeschränkt ist,
wobei die Versorgungsreichweite-Teilnahmeinformation, die zu der Basisstationsentität (111) gesendet wird, angibt, ob die mindestens eine Internet-of-Things-Kommunikationsvorrichtung (21) berechtigt ist, den dritten, den ersten und den zweiten Versorgungsreichweitepegel zu verwenden, oder ob die mindestens eine Internet-of-Things-Kommunikationsvorrichtung (21) berechtigt ist, den dritten und den ersten Versorgungsreichweitepegel zu verwenden, während die Verwendung des zweiten Versorgungsreichweitepegels gesperrt oder eingeschränkt ist,
- wobei in dem Fall, dass die Versorgungsreichweite-Teilnahmeinformation angibt, dass die mindestens eine Internet-of-Things-Kommunikationsvorrichtung (21) zur Nutzung des ersten Versorgungsreichweitepegels berechtigt ist und die Nutzung des zweiten Versorgungsreichweitepegel gesperrt oder eingeschränkt ist, und des Weiteren in dem Fall, dass sich die mindestens eine Internet-of-Things-Kommunikationsvorrichtung (21) in einer Versorgungssituation befindet, die die Verwendung des zweiten Versorgungsreichweitepegels erforderlich macht, eine Kommunikationsanforderung der mindestens einen Internet-of-Things-Kommunikationsvorrichtung (21) zum Senden von Nutzdaten und/oder Steuerungskommunikationsdaten entweder durch die Basisstationsentität (111) zurückgewiesen oder verzögert oder durch die Internet-of-Things-Kommunikationsvorrichtung (21) vermieden wird,

9. Internet-of-Things-Kommunikationsvorrichtung (21) zum Kommunizieren in einem Mobilkommunikationsnetz (100) nach Anspruch 7, oder das Teil eines Systems nach Anspruch 8 ist, oder zum Kommunizieren gemäß einem Verfahren nach einem der Ansprüche 1 bis 6,
wobei die Internet-of-Things-Vorrichtung (21) so konfiguriert ist, dass in dem Fall, dass die Versorgungsreichweite-Teilnahmeinformation angibt, dass die Internet-of-Things-Kommunikationsvorrichtung (21) berechtigt ist, den ersten Versorgungsreichweitepegel zu verwenden, während die Verwendung des zweiten Versorgungsreichweitepegels gesperrt oder eingeschränkt ist, und des Weiteren in dem Fall, dass sich die mindestens eine Internet-of-Things-Kommunikationsvorrichtung (21) in einer Versorgungssituation befindet, die die Verwendung des zweiten Versorgungsreichweitepegels erforderlich macht, die Internet-of-Things-Kommunikationsvorrichtung (21) dafür konfiguriert ist, eine Kommunikationsanforderung an die Basisstationsentität (111) zu senden, die sich auf die vorübergehende Verwendung des zweiten Versorgungsreichweitepegels bezieht.

10. Programm, das einen computerlesbaren Programmcode umfasst, der, wenn er in einer Internet-of-Things-Kommunikationsvorrichtung (21) oder in einer Netzkomponente eines Mobilkommunikationsnetzes (100) oder teilweise in einer Internet-of-Things-Kommunikationsvorrichtung (21) und teilweise in einer Netzkomponente eines Mobilkommunikationsnetzes (100) ausgeführt wird, die Internet-of-Things-Kommunikationsvorrichtung (21) und/oder die Netzkomponente des Mobilkommunikationsnetzes (100) veranlasst, ein Verfahren nach einem der Ansprüche 1 bis 6 auszuführen.

11. Computerprogrammprodukt für eine verbesserte Kommunikation mindestens einer Internet-of-Things-Kommunikationsvorrichtung (21) in einem Mobilkommunikationsnetz (100), wobei das Computerprogrammprodukt ein auf einem Speichermedium gespeichertes Computerprogramm umfasst, wobei das Computerprogramm Programmcode umfasst, der, wenn er in einer Internet-of-Things-Kommunikationsvorrichtung (21) oder in einer Netzkomponente eines Mobilkommunikationsnetzes (100) oder teilweise in einer Internet-of-Things-Kommunikationsvorrichtung (21) und teilweise in einer Netzkomponente eines Mobilkommunikationsnetzes (100) ausgeführt wird, die Internet-of-Things-Kommunikationsvorrichtung (21) und/oder die Netzkomponente des Mobilkommunikationsnetzes (100) veranlasst, ein Verfahren nach einem der Ansprüche 1 bis 6 auszuführen.

## Revendications

1. Procédé permettant une communication améliorée d'au moins un dispositif de communication pour l'Internet des objets (21) dans un réseau de communication mobile (100), dans lequel le réseau de communication mobile (100) comprend un réseau d'accès (110) et un réseau central (120), dans lequel le réseau d'accès (110) comprend au moins une cellule radioélectrique (10) et une entité station de base (111) associée à l'au moins une cellule radioélectrique (10),
dans lequel au moins un premier niveau d'extension de couverture et un deuxième niveau d'extension de couverture peuvent être appliqués concernant la communication entre l'au moins un dispositif de communication pour l'Internet des objets (21) et le réseau de communication mobile (100), dans lequel l'au moins un dispositif de communication pour l'Internet des objets (21) a un profil d'abonné au sein du réseau de communication mobile (100), de sorte qu'il est configuré soit pour utiliser à la fois le premier et le deuxième niveau d'extension de couverture soit pour utiliser le premier niveau d'extension de couverture, tandis que l'utilisation du deuxième niveau d'extension de couverture est interdite ou limitée, dans lequel le procédé comprend les étapes suivantes :
- dans une première étape et tandis que l'au moins un dispositif de communication pour l'Internet des objets (21) est desservi par l'entité station de base (111), une information d'abonnement à une extension de couverture est transmise à l'entité station de base (111), l'information d'abonnement à une extension de couverture se rapportant à l'au moins un dispositif de communication pour l'Internet des objets (21), et indiquant si l'au moins un dispositif de communication pour l'Internet des objets (21) est abonné pour utiliser à la fois le premier et le deuxième niveau d'extension de couverture ou si l'au moins un dispositif de communication pour l'Internet des objets (21) est abonné pour utiliser le premier niveau d'extension de couverture, tandis que l'utilisation du deuxième niveau d'extension de couverture est interdite ou limitée,
- dans une deuxième étape faisant suite à la première étape, dans le cas où l'information d'abonnement à une extension de couverture indique que l'au moins un dispositif de communication pour l'Internet des objets (21) est abonné pour utiliser le premier niveau d'extension de couverture et que l'utilisation du deuxième niveau d'extension de couverture est interdite ou limitée, et en outre dans le cas où l'au moins un dispositif de communication pour l'Internet des objets (21) se trouve dans une situation de couverture nécessitant l'utilisation du deuxième niveau d'extension de couverture, une demande de communication, de l'au moins un dispositif de communication pour l'Internet des objets (21), pour transmettre des données utiles et/ou de commande de communication, est soit rejetée soit retardée par l'entité station de base (111) soit encore évitée par le dispositif de communication pour l'Internet des objets (21), dans lequel - hormis le premier niveau d'extension de couverture et le deuxième niveau d'extension de couverture - au moins un troisième niveau d'extension de couverture peut être appliqué concernant la communication entre l'au moins un dispositif de communication pour l'Internet des objets (21) et le réseau de communication mobile (100), dans lequel l'au moins un dispositif de communication pour l'Internet des objets (21) a un profil d'abonné au sein du réseau de communication mobile (100), de sorte qu'il est configuré soit pour utiliser le troisième, le premier et le deuxième niveau d'extension de couverture soit pour utiliser le troisième et le premier niveau d'extension de couverture, tandis que l'utilisation du deuxième niveau d'extension de couverture est interdite ou limitée,
dans lequel l'information d'abonnement à une extension de couverture, qui est transmise à l'entité station de base (111) à la première étape, indique si l'au moins un dispositif de communication pour l'Internet des objets (21) est abonné pour utiliser le troisième, le premier et le deuxième niveau d'extension de couverture ou si l'au moins un dispositif de communication pour l'Internet des objets (21) est abonné pour utiliser le troisième et le premier niveau d'extension de couverture, tandis que l'utilisation du deuxième niveau d'extension de couverture est interdite ou limitée.

2. Procédé selon la revendication 1, dans lequel, dans une troisième étape faisant suite à la première étape, mais antérieure à la deuxième étape, l'information d'abonnement à une extension de couverture est transmise par l'entité station de base (111) à l'au moins un dispositif de communication pour l'Internet des objets (21), dans lequel l'information d'abonnement à une extension de couverture indique si l'au moins un dispositif de communication pour l'Internet des objets (21) est abonné pour utiliser à la fois le premier et le deuxième niveau d'extension de couverture ou si l'au moins un dispositif de communication pour l'Internet des objets (21) est abonné pour utiliser le premier niveau d'extension de couverture, tandis que l'utilisation du deuxième niveau d'extension de couverture est interdite ou limitée, dans lequel, dans la deuxième étape, le dispositif de communication pour l'Internet des objets (21) évite au moins les demandes de communication, destinées à l'entité station de base (111), se rapportant à la transmission de données utiles de communication.

3. Procédé selon l'une des revendications précédentes, dans lequel, dans la deuxième étape - et dans le cas où l'information d'abonnement à une extension de couverture indique que l'au moins un dispositif de communication pour l'Internet des objets (21) est abonné pour utiliser le premier niveau d'extension de couverture tandis que l'utilisation du deuxième niveau d'extension de couverture est interdite ou limitée, et dans le cas en outre où l'au moins un dispositif de communication pour l'Internet des objets (21) se trouve dans une situation de couverture nécessitant l'utilisation du deuxième niveau d'extension de couverture - le dispositif de communication pour l'Internet des objets (21) transmet à l'entité station de base (111) une demande de communication se rapportant à l'utilisation temporaire du deuxième niveau d'extension de couverture.

4. Procédé selon l'une des revendications précédentes, dans lequel l'utilisation du premier niveau d'extension de couverture est associée à l'utilisation - par l'au moins un dispositif de communication pour l'Internet des objets (21) - d'une première partie d'un canal d'accès aléatoire au sein de la cellule radioélectrique (10) de l'entité station de base (111), et dans lequel l'utilisation du deuxième niveau d'extension de couverture est associée à l'utilisation - par l'au moins un dispositif de communication pour l'Internet des objets (21) - d'une seconde partie d'un canal d'accès aléatoire au sein de la cellule radioélectrique (10) de l'entité station de base (111), dans lequel la demande de communication, de l'au moins un dispositif de communication pour l'Internet des objets (21), pour transmettre des données utiles et/ou de commande de communication, utilise la seconde partie du canal d'accès aléatoire.

5. Procédé selon l'une des revendications précédentes, dans lequel le réseau de communication mobile (100) comprend, en tant que partie du réseau central (120), au moins une entité de gestion de mobilité, dans lequel l'information d'abonnement à une extension de couverture est transmise à l'entité station de base (111) - par l'entité de gestion de mobilité - en tant qu'information d'identité de profil d'abonné,
l'information d'identité de profil d'abonné se rapportant à l'au moins un dispositif de communication pour l'Internet des objets (21), et comprenant une indication de ce que l'au moins un dispositif de communication pour l'Internet des objets (21) est abonné ou non pour utiliser à la fois le premier et le deuxième niveau d'extension de couverture ou de ce que l'au moins un dispositif de communication pour l'Internet des objets (21) est abonné ou non pour utiliser le premier niveau d'extension de couverture, tandis que l'utilisation du deuxième niveau d'extension de couverture est interdite ou limitée.

6. Procédé selon l'une des revendications précédentes, dans lequel :
- soit le troisième niveau d'extension de couverture correspond à un niveau de couverture normale, le premier niveau d'extension de couverture correspondant à un niveau de couverture accrue comparativement au niveau de couverture normale, et le deuxième niveau d'extension de couverture correspondant à un niveau de couverture accrue comparativement au premier niveau d'extension de couverture,
- soit le deuxième niveau d'extension de couverture correspond à un niveau de couverture accrue comparativement au premier niveau d'extension de couverture, le troisième niveau d'extension de couverture correspondant à un niveau de couverture accrue comparativement au deuxième niveau d'extension de couverture,
dans lequel le deuxième niveau d'extension de couverture se rapporte à l'utilisation d'un plus grand nombre de répétitions ou d'autres moyens d'amélioration de couverture - y compris une largeur de bande plus étroite - comparativement au premier niveau d'extension de couverture, lors de la transmission de données depuis l'entité station de base (111) vers l'au moins un dispositif de communication pour l'Internet des objets (21) ou *vice versa.*

7. Réseau de communication mobile (100) permettant une communication améliorée d'au moins un dispositif de communication pour l'Internet des objets (21) dans un réseau de communication mobile (100), dans lequel le réseau de communication mobile (100) comprend un réseau d'accès (110) et un réseau central (120), dans lequel le réseau d'accès (110) comprend au moins une cellule radioélectrique (10) et une entité station de base (111) associée à l'au moins une cellule radioélectrique (10),
dans lequel au moins un premier niveau d'extension de couverture et un deuxième niveau d'extension de couverture peuvent être appliqués concernant la communication entre l'au moins un dispositif de communication pour l'Internet des objets (21) et le réseau de communication mobile (100), dans lequel l'au moins un dispositif de communication pour l'Internet des objets (21) a un profil d'abonné au sein du réseau de communication mobile (100), de sorte qu'il est configuré soit pour utiliser à la fois le premier et le deuxième niveau d'extension de couverture soit pour utiliser le premier niveau d'extension de couverture, tandis que l'utilisation du deuxième niveau d'extension de couverture est interdite ou limitée,
dans lequel le réseau de communication mobile (100) est configuré de telle sorte que :
- tandis que l'au moins un dispositif de communication pour l'Internet des objets (21) est desservi par l'entité station de base (111), une information d'abonnement à une extension de couverture est transmise à l'entité station de base (111), l'information d'abonnement à une extension de couverture se rapportant à l'au moins un dispositif de communication pour l'Internet des objets (21), et indiquant si l'au moins un dispositif de communication pour l'Internet des objets (21) est abonné pour utiliser à la fois le premier et le deuxième niveau d'extension de couverture ou si l'au moins un dispositif de communication pour l'Internet des objets (21) est abonné pour utiliser le premier niveau d'extension de couverture, tandis que l'utilisation du deuxième niveau d'extension de couverture est interdite ou limitée, dans lequel - hormis le premier niveau d'extension de couverture et le deuxième niveau d'extension de couverture - au moins un troisième niveau d'extension de couverture peut être appliqué concernant la communication entre l'au moins un dispositif de communication pour l'Internet des objets (21) et le réseau de communication mobile (100), dans lequel l'au moins un dispositif de communication pour l'Internet des objets (21) a un profil d'abonné au sein du réseau de communication mobile (100), de sorte qu'il est configuré soit pour utiliser le troisième, le premier et le deuxième niveau d'extension de couverture soit pour utiliser le troisième et le premier niveau d'extension de couverture, tandis que l'utilisation du deuxième niveau d'extension de couverture est interdite ou limitée,
dans lequel l'information d'abonnement à une extension de couverture, qui est transmise à l'entité station de base (111), indique si l'au moins un dispositif de communication pour l'Internet des objets (21) est abonné pour utiliser le troisième, le premier et le deuxième niveau d'extension de couverture ou si l'au moins un dispositif de communication pour l'Internet des objets (21) est abonné pour utiliser le troisième et le premier niveau d'extension de couverture, tandis que l'utilisation du deuxième niveau d'extension de couverture est interdite ou limitée,
- dans le cas où l'information d'abonnement à une extension de couverture indique que l'au moins un dispositif de communication pour l'Internet des objets (21) est abonné pour utiliser le premier niveau d'extension de couverture et que l'utilisation du deuxième niveau d'extension de couverture est interdite ou limitée, et dans le cas en outre où l'au moins un dispositif de communication pour l'Internet des objets (21) se trouve dans une situation de couverture nécessitant l'utilisation du deuxième niveau d'extension de couverture, une demande de communication, de l'au moins un dispositif de communication pour l'Internet des objets (21), pour transmettre des données utiles et/ou de commande de communication, est soit rejetée soit retardée par l'entité station de base (111) soit encore évitée par le dispositif de communication pour l'Internet des objets (21).

8. Système permettant une communication améliorée d'au moins un dispositif de communication pour l'Internet des objets (21) dans un réseau de communication mobile (100), le système comprenant le dispositif de communication pour l'Internet des objets (21) et le réseau de communication mobile (100), dans lequel le réseau de communication mobile (100) comprend un réseau d'accès (110) et un réseau central (120), dans lequel le réseau d'accès (110) comprend au moins une cellule radioélectrique (10) et une entité station de base (111) associée à l'au moins une cellule radioélectrique (10),
dans lequel au moins un premier niveau d'extension de couverture et un deuxième niveau d'extension de couverture peuvent être appliqués concernant la communication entre l'au moins un dispositif de communication pour l'Internet des objets (21) et le réseau de communication mobile (100), dans lequel l'au moins un dispositif de communication pour l'Internet des objets (21) a un profil d'abonné au sein du réseau de communication mobile (100), de sorte qu'il est configuré soit pour utiliser à la fois le premier et le deuxième niveau d'extension de couverture soit pour utiliser le premier niveau d'extension de couverture, tandis que l'utilisation du deuxième niveau d'extension de couverture est interdite ou limitée,
dans lequel le système est conçu de telle sorte que :
- tandis que l'au moins un dispositif de communication pour l'Internet des objets (21) est desservi par l'entité station de base (111), une information d'abonnement à une extension de couverture est transmise à l'entité station de base (111), l'information d'abonnement à une extension de couverture se rapportant à l'au moins un dispositif de communication pour l'Internet des objets (21), et indiquant si l'au moins un dispositif de communication pour l'Internet des objets (21) est abonné pour utiliser à la fois le premier et le deuxième niveau d'extension de couverture ou si l'au moins un dispositif de communication pour l'Internet des objets (21) est abonné pour utiliser le premier niveau d'extension de couverture, tandis que l'utilisation du deuxième niveau d'extension de couverture est interdite ou limitée, dans lequel - hormis le premier niveau d'extension de couverture et le deuxième niveau d'extension de couverture - au moins un troisième niveau d'extension de couverture peut être appliqué concernant la communication entre l'au moins un dispositif de communication pour l'Internet des objets (21) et le réseau de communication mobile (100), dans lequel l'au moins un dispositif de communication pour l'Internet des objets (21) a un profil d'abonné au sein du réseau de communication mobile (100), de sorte qu'il est configuré soit pour utiliser le troisième, le premier et le deuxième niveau d'extension de couverture soit pour utiliser le troisième et le premier niveau d'extension de couverture, tandis que l'utilisation du deuxième niveau d'extension de couverture est interdite ou limitée,
dans lequel l'information d'abonnement à une extension de couverture, qui est transmise à l'entité station de base (111) indique si l'au moins un dispositif de communication pour l'Internet des objets (21) est abonné pour utiliser le troisième, le premier et le deuxième niveau d'extension de couverture ou si l'au moins un dispositif de communication pour l'Internet des objets (21) est abonné pour utiliser le troisième et le premier niveau d'extension de couverture, tandis que l'utilisation du deuxième niveau d'extension de couverture est interdite ou limitée,
- dans le cas où l'information d'abonnement à une extension de couverture indique que l'au moins un dispositif de communication pour l'Internet des objets (21) est abonné pour utiliser le premier niveau d'extension de couverture et que l'utilisation du deuxième niveau d'extension de couverture est interdite ou limitée, et dans le cas en outre où l'au moins un dispositif de communication pour l'Internet des objets (21) se trouve dans une situation de couverture nécessitant l'utilisation du deuxième niveau d'extension de couverture, une demande de communication, de l'au moins un dispositif de communication pour l'Internet des objets (21), pour transmettre des données utiles et/ou de commande de communication, est soit rejetée soit retardée par l'entité station de base (111) soit encore évitée par le dispositif de communication pour l'Internet des objets (21).

9. Dispositif de communication pour l'Internet des objets (21) permettant de communiquer dans un réseau de communication mobile (100) selon la revendication 7 ou faisant partie d'un système selon la revendication 8 ou permettant de communiquer selon un procédé selon l'une des revendications 1 à 6, dans lequel le dispositif de communication pour l'Internet des objets (21) est configuré de telle sorte que dans le cas où l'information d'abonnement à une extension de couverture indique que le dispositif de communication pour l'Internet des objets (21) est abonné pour utiliser le premier niveau d'extension de couverture tandis que l'utilisation du deuxième niveau d'extension de couverture est interdite ou limitée, et dans le cas en outre où l'au moins un dispositif de communication pour l'Internet des objets (21) se trouve dans une situation de couverture nécessitant l'utilisation du deuxième niveau d'extension de couverture, le dispositif de communication pour l'Internet des objets (21) est configuré pour transmettre à l'entité station de base (111) une demande de communication se rapportant à l'utilisation temporaire du deuxième niveau d'extension de couverture.

10. Programme comprenant un code de programme lisible par ordinateur, qui, lorsqu'il est exécuté sur un dispositif de communication pour l'Internet des objets (21) ou sur un composant de réseau d'un réseau de communication mobile (100), ou en partie sur un dispositif de communication pour l'Internet des objets (21) et en partie sur un composant de réseau du réseau de communication mobile (100), fait mettre en œuvre au dispositif de communication pour l'Internet des objets (21) et/ou au composant de réseau du réseau de communication mobile (100) un procédé selon l'une des revendications 1 à 6.

11. Produit-programme informatique permettant une communication améliorée d'au moins un dispositif de communication pour l'Internet des objets (21) dans un réseau de communication mobile (100), le produit-programme informatique comprenant un programme informatique stocké sur un support d'enregistrement ; le programme informatique comprenant un code de programme qui, lorsqu'il est exécuté sur un dispositif de communication pour l'Internet des objets (21) ou sur un composant de réseau d'un réseau de communication mobile (100), ou en partie sur un dispositif de communication pour l'Internet des objets (21) et en partie sur un composant de réseau du réseau de communication mobile (100), fait mettre en œuvre au dispositif de communication pour l'Internet des objets (21) et/ou au composant de réseau du réseau de communication mobile (100) un procédé selon l'une des revendications 1 à 6.
